# FASCICULE DE BREVET EUROPEEN

(11) **EP 3 019 859 B1**
(45) Date de publication et mention de la délivrance du brevet: **18.04.2018**
(21) Numéro de dépôt: 14749884.4
(22) Date de dépôt: 26.06.2014
(51) Int. Cl.: G01N 27/90

(54) **DISPOSITIF POUR L'INSPECTION D'UNE SURFACE D'UNE PIÈCE ÉLECTRIQUEMENT CONDUCTRICE**
VORRICHTUNG ZUR INSPEKTION DER OBERFLÄCHE EINES ELEKTRISCH LEITFÄHIGEN OBJEKTES
DEVICE FOR INSPECTING THE SURFACE OF AN ELECTRICALLY CONDUCTING OBJECT

(30) Priorité: 10.07.2013 FR 1356779
(43) Date de publication de la demande: 18.05.2016
(73) Titulaire: Snecma, 75015 Paris (FR)
(72) Inventeur: CHATENET, Luc, Henri, F-77550 Moissy-Cramayel Cedex (FR)
(74) Mandataire: Desormiere, Pierre-Louis
(86) Numéro de dépôt international: PCT/FR2014/051618
(87) Numéro de publication internationale: WO 2015/004364

(56) Documents cités:
- EP-A1- 1 245 953
- US-A- 4 668 912
- US-A- 4 889 679
- US-A1- 2003 155 914
- US-A1- 2004 217 759
- US-A1- 2007 120 559

## Description

### Contexte technique

L'invention s'inscrit dans le domaine des techniques pour inspection de pièces mécaniques, notamment de pièces de moteurs, par exemple des pièces de turbomachines, et en particulier des pièces comportant des trous.

De nombreuses pièces de moteurs sont critiques, et leur rupture est susceptible d'avoir des répercussions graves sur l'ensemble du système, par exemple l'aéronef. On s'intéresse ici, en particulier mais pas exclusivement, à des pièces dans lesquelles un trou a été pratiqué. De tels trous, qui peuvent avoir des géométries diverses, notamment une géométrie allongée avec un axe médian, sont susceptibles de comporter des criques, c'est-à-dire des anfractuosités de surface qui peuvent servir de point de départ à une rupture de la pièce.

Ces criques peuvent apparaître au cours de l'usinage du trou, par exemple par usinage à décharge électrique (procédé EDM pour « electrical discharge machining »), ou au cours de l'utilisation de la pièce, par exemple dans un moteur.

Il est nécessaire, dans de nombreuses situations, d'effectuer un contrôle des pièces pour s'assurer qu'aucun risque n'est causé par la présence de telles criques. De tels contrôles peuvent être effectués sur les pièces neuves ou sur des pièces ayant déjà servi.

Un principe connu de contrôle est le procédé par courant de Foucault, consistant à vérifier la continuité de la matière à partir de la mesure de courants induits par un champ magnétique.

Un tel procédé est mis en oeuvre avec un dispositif de mesure sophistiqué comprenant en général plusieurs sondes ponctuelles à courant de Foucault. On connait de tels dispositifs montés sur des bras métalliques articulés avec ressort ou des balais, qui sont fragiles, ce qui constitue un premier problème.

Mais de plus, la construction de tels systèmes de sondes doit en général être revue dès que l'on s'intéresse à un trou de géométrie différente de celui pour lequel le système a initialement été conçu, pour prendre en compte la courbure de l'axe médian du trou. Ainsi, le positionnement et la longueur des bras ou des balais doit être revue, ce qui est complexe et couteux. De plus, il est très malaisé de bien positionner ces dispositifs en utilisant un protocole automatique, à l'aide d'un robot ou d'un outillage de positionnement complexe.

Enfin, souvent, on est amené à devoir changer de sonde pour finaliser l'observation d'un trou donné et de son embouchure ou de son fond. En effet, le guidage d'un système de sondes à l'embouchure ou au fond d'un trou est particulièrement malaisé, et on préfère utiliser des sondes spécifiques pour ces zones difficiles.

Le document US 4668912 divulgue un dispositif pour l'inspection d'une surface électriquement conductrice qui comprend une pluralité de sondes de Foucault.

Au final, les systèmes existants sont complexes à mettre en oeuvre, et excessivement chers du fait de la multiplicité des dispositifs à concevoir pour des trous différents ou même pour un unique type de trou.

L'invention vise à résoudre ces difficultés.

### Définition de l'invention et avantages associés

Pour résoudre ces difficultés, il est proposé un dispositif pour l'inspection d'une surface d'une pièce électriquement conductrice, en particulier la surface interne d'un trou, comprenant une pluralité de sondes à courant de Foucault disposés sur une surface convexe du dispositif et des moyens d'application des sondes contre la surface à inspecter dans lequel le dispositif est introduit, caractérisé en ce que les sondes sont fixées sur des lames flexibles s'étendant chacune selon une direction longitudinale du dispositif les unes à côté des autres, lesdits moyens d'application comprenant un matériau déformable dont la compression selon ladite direction longitudinale entraine l'expansion transversalement à la direction longitudinale, ladite expansion déformant lesdites lames pour appliquer les sondes contre la surface.

Grâce à ce dispositif, on dispose d'un outil beaucoup plus simple à utiliser, s'adaptant à de nombreuses situations, et qui est robuste et peu couteux à fabriquer et à utiliser. Le nombre de sondes à courant de Foucault disposées sur l'outil peut être élevé, dans la mesure où il n'est pas nécessaire de placer un bras métallique avec ressort pour chacune d'entre elles.

La sonde peut être manipulée par un automatisme (robot), et la mesure est tout de même satisfaisante, du fait de l'adaptation de la sonde aux surfaces sur laquelle elle est appliquée.

Les surfaces concernées sont notamment les surfaces internes de trous, mais le dispositif peut être utilisé pour inspecter d'autres surfaces. De manière générale, il n'est nul besoin, avec ce dispositif, de multiplier le développement de nombreuses sondes pour une application ou pour plusieurs applications, car le dispositif s'adapte à la plupart des configurations. Notamment en ce qui concerne l'inspection de surface de trous, le dispositif permet en général d'inspecter à la fois le fond, l'embouchure, et la surface principale du trou, offrant ainsi un champ d'observation amélioré. Finalement, le temps de contrôle est diminué.

Selon les modes de réalisation, les lames flexibles sont des circuits imprimés souples, intéressants car peu couteux, ou des lames métalliques flexibles. Le matériau déformable peut être du silicone ou tout autre matériau déformable.

Selon un aspect de mise en oeuvre intéressant, le matériau déformable est placé longitudinalement entre deux pièces de compression et la compression longitudinale du matériau déformable est obtenue à l'aide d'un câble fixé à une des deux pièces et coulissant par rapport à la deuxième pièce. On propose, dans certaines réalisations, que la compression selon la direction longitudinale soit limitée par une butée. Avantageusement, ladite surface convexe est une circonférence circulaire ou elliptique du dispositif. Cela permet d'inspecter des trous à la section desquels la circonférence du dispositif est adaptée.

Dans une telle configuration, le dispositif comprend au moins un ensemble supplémentaire de lames flexibles sur une circonférence du dispositif, les lames étant comprimées vers l'extérieur du dispositif, pour guider la sonde perpendiculairement à la paroi du trou ou protéger les sondes à courant de Foucault lors de l'entrée ou la sortie du dispositif dans ou hors du trou. Le dispositif protège ainsi les sondes de Foucault pour éviter qu'elles ne soient endommagées au moment de l'introduction ou de la sortie du dispositif dans le trou à inspecter.

Le dispositif peut comprendre de plus deux tels ensembles supplémentaires de lames flexibles, dits « guides », l'un en amont de ladite pluralité de sondes de Foucault et l'autre en aval de la dite pluralité de sondes de Foucault. Les lames flexibles de l'ensemble pour guider exercent de préférence sur les parois une pression supérieure à celle exercée par les lames flexibles portant les sondes quand celles-ci sont appliquées contre les parois.

L'invention propose aussi une méthode de fabrication d'un dispositif tel qu'évoqué comprenant la formation d'entailles dans une plaque flexible, pour former des lames flexibles maintenues entre elles à leurs extrémités, pour porter au moins une sonde par lame, et une étape de moulage du matériau déformable sur la face de la plaque flexible opposée aux sondes à courant de Foucault. Cette méthode de fabrication est particulièrement pratique et simple à mettre en oeuvre, et fait partie des apports de la présente invention.

Celle-ci va maintenant être décrite en relation avec les figures.

### Liste des figures

La figure 1 présente une pièce comportant un trou à inspecter.
La figure 2 présente un dispositif d'inspection développé pour inspecter le trou de la pièce de la figure 1, conformément aux principes de l'invention.
La figure 3 présente une étape de fabrication d'un tel dispositif d'inspection.
La figure 4 présente une étape ultérieure de fabrication.
La figure 5 présente un ensemble central du dispositif d'inspection de la figure 2, obtenu à l'issu des étapes présentées aux figures 3 et 4.
La figure 6 présente ce même ensemble en fonctionnement.

### Description détaillée

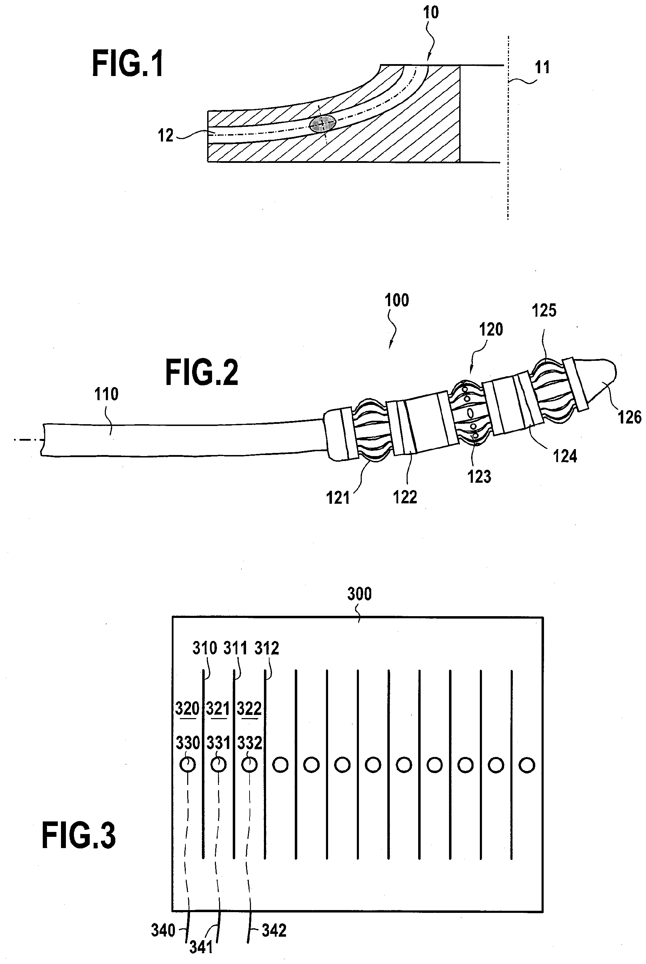

En référence à la **figure 1****,** on a représenté une pièce à inspecter, ici un disque, 10, dont l'axe 11 est à droite de la figure, et qui comprend un trou 12 allongé, de section elliptique et dont l'axe est curviligne. Jusqu'ici, plusieurs outils à sondes à courant de Foucault étaient nécessaires pour inspecter un tel trou. Or ces outils étaient à la fragile et chers, ce qui rendait l'opération délicate. Qui plus est, le contrôle du trou doit être fait de manière particulièrement fine, car la pièce est tout à fait critique.

On note ici que le trou 12 est deux fois débouchant, puisque ses deux extrémités débouchent sur des faces de la pièce, mais des trous une seule fois débouchant doivent également être inspectés dans de nombreuses situations.

En **figure 2****,** le dispositif d'inspection 100 conçu pour la recherche de criques dans le trou 12 est présenté. Il a une forme allongé, et comprend une gaine flexible d'entraînement 110 à l'extrémité de laquelle est fixée une tête 120 composée de plusieurs éléments. Précisément, cette tête comporte, depuis la gaine 110 vers l'extrémité libre du dispositif, un premier ensemble flexible en compression, qualifié de « guide » 121, une liaison flexible 122, un ensemble flexible en compression réglable, constituant le coeur fonctionnel 123 du dispositif d'inspection, une deuxième liaison flexible 124, ainsi qu'un deuxième ensemble flexible en compression, qualifié de « guide » 125. Une extrémité 126 en forme de cône termine le dispositif. On précise que même s'ils sont souvent avantageux, les guides 121 et 125 ne sont pas absolument nécessaires à la mise en oeuvre de l'invention.

En ce qui concerne le coeur fonctionnel, le concept gouvernant son fonctionnement du coeur fonctionnel est novateur et permet d'augmenter, par rapport aux dispositifs antérieurs le nombre de sondes à courant de Foucault pouvant être appliquées sur la surface à inspecter, et diminuer le temps de contrôle associé.

En **figure 3****,** une étape d'un processus de fabrication d'un dispositif d'inspection tel que présenté en figure 2 est présentée. Une plaque 300 de circuit imprimé souple de forme rectangulaire fait l'objet d'entailles traversantes 310, 311, 312, ... parallèles les unes aux autres et, ici parallèles à la grande dimension de la plaque. En ce qui concerne leur longueur, ces entailles s'étendent chacune sur, par exemple, les deux tiers centraux de la plaque 300. Elles sont équidistantes les unes des autres et permettent de définir des lames 320, 312, 322, ... qui sont maintenues les unes aux autres par la matière non entaillée en dehors des deux tiers centraux de la plaque 300. Entre deux entailles adjacentes, à égale distance de chacune d'entre elles et à mi-longueur de celles-ci, des sondes à courant de Foucault 330, 331, 332 sont déposées, avant ou après que les entailles soient pratiquées. Une connexion électrique 340, 341, 342, ... est mise en place par sonde.

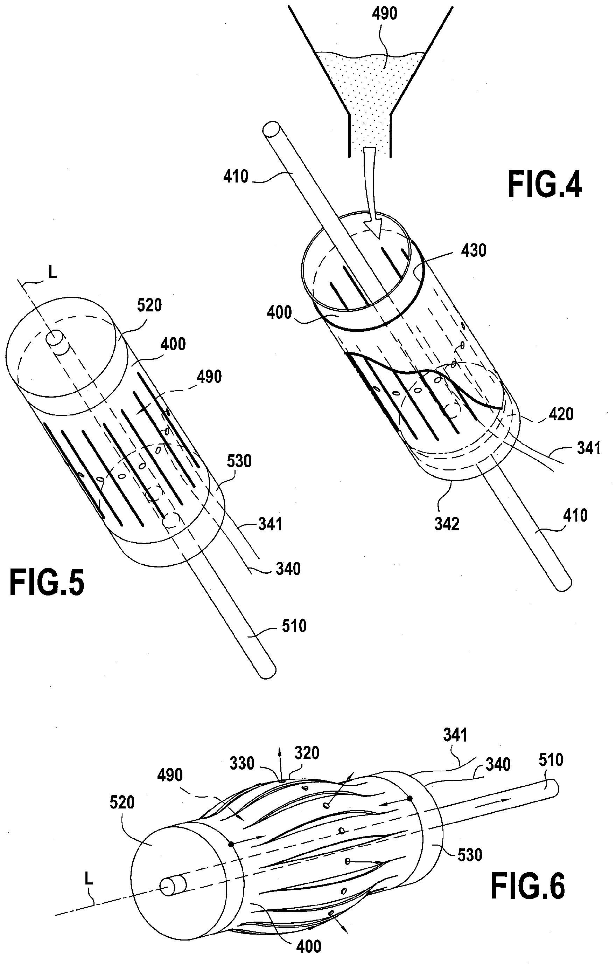

En **figure 4****,** on a représenté l'étape ultérieure de fabrication du dispositif d'inspection. La plaque 300 est roulée en cylindre 400 autour d'un axe parallèle aux entailles, en sorte que les sondes soient face à l'extérieur, et que du matériau déformable 490 puisse être injecté ou coulé à l'intérieur par une des deux embouchures du cylindre, pour en épouser la forme par moulage.

Préalablement à l'injection ou au coulage du produit déformable 490, les connexions électriques 340, 341, 342... des sondes sont disposées pour sortir du cylindre par la deuxième embouchure. Un axe 410 est placé au centre du cylindre en sorte de créer une réservation cylindrique au milieu du matériau injecté ou coulé. Un fond 420 empêche de plus le matériau déformable 490 de sortir du cylindre par la deuxième embouchure. Enfin, un outil de ceinturage 430 (ou outil extérieur de moulage) entoure enfin les lames pour les empêcher de s'étendre axialement lors du dépôt du matériau déformable 490. Il a de préférence la forme du trou à inspecter pour lequel la sonde est fabriquée avec des dimensions légérement plus faibles que celui-ci.

On précise que le cylindre représenté sur les figures est de base circulaire, mais qu'un cylindre de base elliptique ou encore d'une autre forme peut être utilisée. Comme cela sera évoqué à la fin du document, la plaque 300 n'est pas nécessairement conformée pour prendre une forme cylindrique fermée, bien que l'exemple présenté porte sur une telle forme cylindrique fermée, mais elle en tout état de cause déformée pour prendre une forme cylindrique convexe, à l'intérieur de laquelle le moulage est effectué.

Dans un mode de réalisation particulier, le montage de la figure 4 est réalisé par report de la plaque de la figure 3 sur deux supports (non représentés) définissant les embouchures amont et aval de la structure. Une gaine ou un ruban adhésif permet de maintenir le circuit imprimé sur les supports et de réaliser l'étanchéité nécessaire au niveau de ces embouchures. L'axe 410 permet, dans certaines réalisations, d'aligner les deux supports. Dans ce mode de réalisation, une fois le cylindre formé, il est inséré dans deux préformes de moulage, l'une étant un axe cylindrique central (correspondant à l'axe 410) et l'autre une enceinte externe (correspondant à l'outil de ceinturage 430). Les deux préformes de moulage sont enduites de produits démoulant, tel que du Téflon (marque déposée), obtenu par pulvérisation, ou déposé sous forme de feuille. Les feuilles de Téflon permettent de plus de réserver un jeu entre l'enceinte externe et le circuit imprimé. Un bouchon (correspondant au fond 420), par exemple un bouchon en silicone, est placé pour obstruer une des embouchures du cylindre, par laquelle sont néanmoins extraits les fils de connexion électrique des sondes.

Le produit déformable 490 est injecté ou coulé, de manière à remplir, partiellement ou entièrement, le volume du cylindre 400.

Une fois le produit déformable 490 injecté ou coulé et sa prise en forme achevée, la ceinture 430 et l'axe 410 sont retirés. La ceinture a permis au produit déformable 490 de prendre la forme du cylindre 400 sans le déformer, et l'axe 410 a permis de créer une réservation cylindrique centrale d'un bout à l'autre du dispositif, dans le produit déformable 490.

En **figure 5****,** on a représenté le dispositif à une étape ultérieure de la fabrication. Un câble 510 a été inséré dans la réservation créée au centre du dispositif, et est fixé par une extrémité, à une pièce de pression 520 placée à l'une des embouchures du cylindre 400 de manière à être en mesure d'appuyer sur le produit déformable 490 moulé dans le cylindre 400. La pièce de pression 520 est, si besoin, fixée au cylindre 400, par exemple à l'aide d'un ruban adhésif ou d'une gaine placée sur l'extrémité du cylindre. Le câble 510 sort du cylindre 400 par l'autre embouchure, à travers ou à côté, une pièce de retenue 530 qui s'appuie elle aussi sur le produit déformable 490, et qui est, si besoin, fixée au cylindre 400, par exemple à l'aide d'un ruban adhésif ou d'une gaine placée sur l'extrémité du cylindre.

Les pièces de pression et de retenue 520 et 530 peuvent être par exemple des supports utilisés pour fixer la plaque 300 sous la forme du cylindre 400 avant le moulage. D'autres solutions sont possibles, ces deux pièces pouvant être introduites à un moment ou un autre dans la structure. Par ailleurs le fond 420, présenté en figure 4, est conservé, mais dans certaines réalisations, il pourrait être retiré si nécessaire, une fois le produit déformable 490 moulé.

Le câble 510 peut notamment être serti sur la pièce de pression 520. Par ailleurs, le câble 510 peut avoir une course limitée par une butée formée par un couple tube de câble (non représenté) / rondelle de butée (non représentée). Dans une telle réalisation, le câble 510 est inséré dans un tube qui débute au niveau de la pièce de pression 520, et qui s'achève, quand le câble ne fait pas l'objet d'une traction, à une distance donnée de la sortie de la pièce de retenu 530. Le câble 510 et le tube sont solidaires l'un par rapport à l'autre dans leur mouvement de translation par rapport au produit déformable 490 et à la pièce de retenu 530. La rondelle de butée entoure le câble à sa sortie de la pièce de retenu 530, laisse progresser celui-ci mais bloque le tube. Ainsi, lors d'une traction du câble 510, la course de celui-ci est bloquée par la rencontre entre le tube et la rondelle.

Comme cela est représenté en **figure 6****,** le câble 510 peut, du côté de la pièce de retenu 530, faire l'objet d'une traction qui agit en tirant sur la pièce de pression 520. Une traction sur la câble 510 entraine donc une pression longitudinale (selon la direction L) de la pièce de pression 520 sur le produit déformable 490 moulé dans le cylindre 400. La pièce de retenu 430 a pour fonction quant à elle de retenir le produit déformable, qui est alors compressé longitudinalement. Cela a pour conséquence que le produit déformable appui sur les parois du cylindre, et permet l'expansion radiale des lames 320, 321, 322.... qui se bombent et s'écartent les unes des autres. De préférence, les pièces de retenu 530 et de pression 520 étant disposées symétriquement par rapport aux sondes à courant de Foucault 330, 331, 332 ... et par rapport à la masse de produit déformable 490 moulé dans le cylindre, l'expansion maximale du produit déformable se fait le long de la circonférence du cylindre qui porte les sondes 330, 331, 332 ..., de manière à ce que, en situation d'utilisation du dispositif, celles-ci soient plaquées contre la paroi du trou à inspecter dans lequel le dispositif est inséré. La longueur de la course du câble détermine l'expansion maximale qui sera donnée, en situation d'utilisation, à la circonférence du cylindre, et donc la pression qui sera appliquée aux sondes à courant de Foucault 330, 331, 332.... Il est proposé de définir cette longueur par essai de la sonde, en fonction du type de trou à inspecter.

On précise que d'autres systèmes de compression longitudinale pourraient être utilisés, de manière à provoquer l'expansion du produit déformable 490 dans un plan perpendiculaire à la direction L.

La compression est commandée depuis un poste de contrôle (non représenté), par un opérateur humain ou par un automatisme.

Pour revenir à la structure de la **figure 2****,** les guides 121 et 125 peuvent être réalisés de la même manière que le coeur fonctionnel 123, conformément aux principes présentés aux figures 4 à 6, en omettant bien sûr les sondes à courant de Foucault et leurs connexions électriques. Mais pour les guides 121 et 125, la compression des circuits imprimés flexibles peut être définie au montage de manière définitive, en fixant la deuxième extrémité du câble 510, ou en fixant la compression avec d'autres moyens qu'un câble. Elle peut aussi être adaptée lors de la réalisation du trou à inspecter, pour tenir compte des dimensions exactes de celui-ci.

Cela est différent de ce qui est pratiqué pour le coeur fonctionnel 123, pour lequel le câble 510 permet la mise en compression commandée, une fois le dispositif inséré dans le trou à inspecter, depuis un poste de contrôle. On précise à ce sujet que le câble 510 du coeur fonctionnel 123 et les connexions électriques 340, 341, 342... sont amenés vers un poste de contrôle par l'intérieur de la gaine flexible d'entrainement 110.

L'invention n'est pas limitée aux modes de réalisation présentés mais s'étend à toutes les variantes dans le cadre de la portée des revendications.

Notamment, il est possible de ne pas disposer les sondes à courant de Foucault autour d'une circonférence fermée du dispositif, notamment dans l'hypothèse où la surface à inspecter ne constitue pas une section fermée de trou.

Ainsi on peut utiliser les principes de l'invention en conformant la plaque 300 en un cylindre dont la base est un demi-cercle ou une demi-ellipse, qui constitue donc une surface convexe, la forme étant fermée par une pièce tierce, par exemple plane et de préférence non déformable. Le produit déformable (silicone) est alors moulé dans une cavité formée, par la plaque 300 et la pièce tierce. Ainsi, l'effet de déformation des lames ne se produit que sur un demi-cercle ou une demi-ellipse.

On précise aussi, indépendamment des commentaires qui précèdent, qu'il n'est pas indispensable, pour mettre en oeuvre l'invention, que les sondes soient équidistantes, ou également réparties sur la surface convexe, ou que les lames aient toutes la même largeur.

## Revendications

1. Dispositif (100 ; 500) pour l'inspection d'une surface d'une pièce électriquement conductrice, comprenant une pluralité de sondes à courant de Foucault (330, 331, 332...) disposés sur une surface convexe du dispositif et des moyens d'application des sondes contre la surface à inspecter, **caractérisé en ce que** les sondes (330, 331, 332...) sont fixées sur des lames flexibles (320, 321, 322...) s'étendant chacune selon une direction longitudinale (L) du dispositif les unes à côté des autres, lesdits moyens d'application comprenant un matériau déformable (490) et des moyens de compression longitudinale pour comprimer selon ladite direction longitudinale (L) ledit matériau déformable de manière à entraîner l'expansion transversalement à la direction longitudinale dudit matériau déformable, ladite expansion déformant lesdites lames (320, 321, 322...) pour appliquer les sondes (330, 331, 332...) contre la surface.

2. Dispositif selon la revendication 1, dans lequel les lames flexibles (320, 321, 322...) sont des circuits imprimés souples.

3. Dispositif selon la revendication 1, dans lequel les lames flexibles (320, 321, 322...) sont des lames métalliques flexibles.

4. Dispositif selon l'une des revendications 1 à 3, dans lequel le matériau déformable (490) est du silicone.

5. Dispositif selon l'une des revendications 1 à 4, dans lequel le matériau déformable (490) est placé longitudinalement entre deux pièces de compression (520, 530), et la compression longitudinale du matériau déformable (490) est obtenue à l'aide d'un câble (510) fixé à une des deux pièces (520) et coulissant par rapport à la deuxième pièce (530).

6. Dispositif selon l'une des revendications 1 à 5, dans lequel la compression selon la direction longitudinale est limitée par une butée.

7. Dispositif selon l'une des revendications 1 à 6, dans lequel ladite surface convexe est une circonférence du dispositif.

8. Dispositif selon la revendication 7, dans lequel le dispositif comprend de plus au moins un ensemble supplémentaire de lames flexibles (121, 125) sur une circonférence du dispositif, les lames étant comprimées vers l'extérieur du dispositif, pour guider la sonde perpendiculairement à la paroi d'un trou ou protéger les sondes à courant de Foucault lors de l'entrée ou la sortie du dispositif dans ou hors d'un trou.

9. Dispositif selon la revendication 8, dans lequel le dispositif comprend de plus deux tels ensembles supplémentaires de lames flexibles (121, 125), l'un en amont de ladite pluralité de sondes de Foucault (330, 331, 332...) et l'autre en aval de la dite pluralité de sondes de Foucault (330, 331, 332...).

10. Dispositif selon la revendication 8 ou la revendication 9, dans lequel les lames flexibles de l'ensemble pour guider (121, 125) exercent sur la paroi une pression supérieure à celle exercée par les lames flexibles (320, 321, 322...) portant les sondes (330, 331, 332...) quand lesdites sondes sont appliquées contre la paroi.

11. Méthode de fabrication d'un dispositif selon l'une des revendications 1 à 10, comprenant la formation d'entailles (310, 311, 312...) dans une plaque flexible, pour former des lames flexibles (320, 321, 322, ...) maintenues entre elles à leurs extrémités, pour porter au moins une sonde par lame, et une étape de moulage du matériau déformable (490) sur la face de la plaque flexible opposée aux sondes à courant de Foucault.

## Patentansprüche

1. Vorrichtung (100; 500) zur Inspektion einer Oberfläche eines elektrisch leitenden Teils, umfassend eine Vielzahl von Wirbelstromsonden (330, 331, 332...), welche auf einer konvexen Fläche der Vorrichtung angeordnet sind, und Mittel zum Anlegen der Sonden an die zu inspizierende Oberfläche, **dadurch gekennzeichnet, dass** die Sonden (330, 331, 332...) an flexiblen Lamellen (320, 321, 322...), welche jeweils in einer Längsrichtung (L) der Vorrichtung nebeneinander verlaufen, befestigt sind, wobei die Anlegemittel ein verformbares Material (490) und Längskompressionsmittel umfassen, um das verformbare Material in der Längsrichtung (L) zu komprimieren, um die Ausdehnung des vorformbaren Materials quer zu der Längsrichtung zu bewirken, wobei die Ausdehnung die Lamellen (320, 321, 322...) verformt, um die Sonden (330, 331, 332...) an die Oberfläche anzulegen.

2. Vorrichtung nach Anspruch 1, bei der die flexiblen Lamellen (320, 321, 322...) flexible gedruckte Schaltungen sind.

3. Vorrichtung nach Anspruch 1, bei der die flexiblen Lamellen (320, 321, 322...) flexible Metalllamellen sind.

4. Vorrichtung nach einem der Ansprüche 1 bis 3, bei der das verformbare Material (490) Silikon ist.

5. Vorrichtung nach einem der Ansprüche 1 bis 4, bei der das verformbare Material (490) zwischen zwei Kompressionsteilen (520, 530) längs angeordnet ist, und die Längskompression des verformbaren Materials (490) mit Hilfe eines Seils (510), welches an einem der beiden Teile (520) befestigt ist und gegenüber dem zweiten Teil (530) verschieblich ist, erreicht wird.

6. Vorrichtung nach einem der Ansprüche 1 bis 5, bei der die Kompression in der Längsrichtung durch einen Anschlag begrenzt ist.

7. Vorrichtung nach einem der Ansprüche 1 bis 6, bei der die konvexe Fläche ein Umfang der Vorrichtung ist.

8. Vorrichtung nach Anspruch 7, bei der die Vorrichtung zudem wenigstens eine zusätzliche Anordnung von flexiblen Lamellen (121, 125) an einem Umfang der Vorrichtung umfasst, wobei die Lamellen zur Außenseite der Vorrichtung komprimiert werden, um die Sonde senkrecht zu der Wand eines Lochs zu führen oder um die Wirbelstromsonden beim Hineinfahren oder Herausfahren der Vorrichtung in ein oder aus einem Loch zu schützen.

9. Vorrichtung nach Anspruch 8, bei der die Vorrichtung zudem zwei solche zusätzlichen Anordnungen von flexiblen Lamellen (121, 125) umfasst, eine der Vielzahl von Foucault'schen Sonden (330, 331, 332...) vorgeschaltet und die andere der Vielzahl von Foucault'schen Sonden (330, 331, 332...) nachgeschaltet.

10. Vorrichtung nach Anspruch 8 oder Anspruch 9, bei der die flexiblen Lamellen der Anordnung zum Führen (121, 125) auf der Wand einen Druck ausüben, der größer als derjenige ist, welcher durch die die Sonden (330, 331, 332...) tragenden flexiblen Lamellen (320, 321, 322...) ausgeübt wird, wenn die Sonden an der Wand angelegt werden.

11. Verfahren zur Herstellung einer Vorrichtung nach einem der Ansprüche 1 bis 10, umfassend die Ausbildung von Einschnitten (310, 311, 312...) in einer flexiblen Platte, um flexible Lamellen (320, 321, 322...), welche an ihren Enden untereinander gehalten sind, zu bilden, um wenigstens eine Sonde pro Lamelle zu tragen, sowie einen Schritt des Formens des verformbaren Materials (490) auf der den Wirbelstromsonden gegenüberliegenden Seite der flexiblen Platte.

## Claims

1. A device (100; 500) for inspecting a surface of an electrically conductive part, the device having a plurality of eddy current probes (330, 331, 332, ...) arranged on a convex surface of the device together with application means for applying the probes against the surface to be inspected, the device being **characterized in that** the probes (330, 331, 332, ...) are fastened on flexible strips (320, 321, 322, ...) extending beside one another in a longitudinal direction (L) of the device, said application means comprising a deformable material (490) that, on being compressed along said longitudinal direction (L), gives rise to expansion transversely to the longitudinal direction, said expansion deforming said strips (320, 321, 322, ...) so as to apply the probes (330, 331, 332,...) against the surface.

2. A device according to claim 1, wherein the flexible strips (320, 321, 322, ...) are flexible printed circuits.

3. A device according to claim 1, wherein the flexible strips (320, 321, 322, ...) are flexible metal strips.

4. A device according to any one of claims 1 to 3, wherein the deformable material (490) is silicone.

5. A device according to any one of claims 1 to 4, wherein the deformable material (490) is placed longitudinally between two compression parts (520, 530), and the longitudinal compression of the deformable material (490) is obtained by using a cable (510) that is fastened to one of the two parts (520) and that is slidable relative to the second part (530).

6. A device according to any one of claims 1 to 5, wherein the compression in the longitudinal direction is limited by an abutment.

7. A device according to any one of claims 1 to 6, wherein said convex surface is a circumference of the device.

8. A device according to claim 7, wherein the device further includes at least one additional set of flexible strips (121, 125) on a circumference of the device, the strips being compressed outwards from the device in order to guide the probes perpendicularly to the wall of the hole or to protect the eddy current probes on the device entering or leaving the hole.

9. A device according to claim 8, wherein it further includes two such additional sets of flexible strips (121, 125), one upstream from said plurality of eddy current probes (330, 331, 332, ...) and the other downstream from said plurality of eddy current probes (330, 331, 332, ...).

10. A device according to claim 8 or claim 9, wherein the flexible strips of the guide assembly (121, 125) exert pressure on the wall that is greater than the pressure exerted by the flexible strips (320, 321, 322, ...) carrying the probes (330, 331, 332, ...) when they are applied against the wall.

11. A method of fabricating a device according to any one of claims 1 to 10, comprising forming slits (310, 311, 312, ...) in a flexible plate, so as to form flexible strips (320, 321, 322, ...) that are held together at their ends, so as to carry at least one probe per strip, and a step of molding the deformable material (490) against the face of the flexible plate that is opposite from the eddy current probes.
